# EUROPÄISCHE PATENTSCHRIFT

(11) **EP 1 106 323 B1**
(45) Veröffentlichungstag und Bekanntmachung des Hinweises auf die Patenterteilung: **06.10.2004**
(21) Anmeldenummer: 00126417.5
(22) Anmeldetag: 05.12.2000
(51) Int. Cl.: B29C 44/60, G01B 11/02, G01N 21/00

(54) **Verfahren zur Auswertung von Schäumvorgängen**
Method for evaluating foaming processes
Méthode d'évaluation de procédés d'expansion en mousse

(30) Priorität: 06.12.1999 DE 19958689
(43) Veröffentlichungstag der Anmeldung: 13.06.2001
(73) Patentinhaber: BASF AKTIENGESELLSCHAFT, 67056 Ludwigshafen (DE)
(72) Erfinder: Scherzer, Dietrich, Dr., 67433 Neustadt (DE); Junge, Dieter, 67227 Frankenthal (DE); Schrof, Wolfgang, Dr., 67271 Neuleiningen (DE); Wittstock, Klaus, Dr., 67435 Neustadt (DE); Füger, Claus, 66955 Pirmasens (DE); Götz, Alexander, 67149 Meckenheim (DE); Regenauer, Wolfgang, 67165 Waldsee (DE)
(74) Vertreter: Isenbruck, Günter, Dr.

(56) Entgegenhaltungen:
- US-A- 4 403 502
- US-A- 5 740 074
- ELASTOGRAN GMBH: "Forscher horchen in den Schaum" INTERNET ARTICLE, [Online] Seiten 1-1, XP002192823 Gefunden im Internet: <URL:http://www.elastogran.de/local/fachpr 12.htm> [gefunden am 2002-03-12]

## Beschreibung

Die vorliegende Erfindung betrifft ein Verfahren zur Auswertung von Schäumvorgängen bzw. - reaktionen. Insbesondere bezieht sich die Erfindung auf ein Verfahren zur einfachen und parallelisierbaren Bestimmung kinetischer Parameter beim Verschäumen von Substanzen, insbesondere von Reaktionskunststoffen, wie beispielsweise Polyurethane, Polyester, Epoxide, Harnstoffe oder Formaldehydharze.

Im Allgemeinen wird die Reaktionskinetik von Schäumreaktionen mit sogenannten "Foamrise"-Geräten verfolgt. Dabei wird ein Ultraschallerzeuger und Sensor oberhalb der zu verschäumenden Probe positioniert und aus Laufzeitunterschieden der Schallwellen die Steighöhe des Schaums berechnet. Man erhält dadurch eine sogenannte "Foamrise"-Kurve, aus deren Verlauf der Fachmann die Schäumkinetik ableiten kann. Üblich ist es, die Reaktionszeiten entweder während des Schäumvorgangs direkt zu beobachten oder aus der aufgenommenen "Foamrise"-Kurve abzuleiten.

Durch die Verwendung von Ultraschall ist die Auflösung der Steighöhe nur auf etwa einige Millimeter genau. Es müssen daher relativ große Mengen an Kunststoff verschäumt werden, um eine hinreichende Genauigkeit zu erhalten. Üblicherweise verwendet man hier Volumina von etwa 11 Schaum. Geräte dieser Art sind bekannt. Das entsprechende Meßverfahren ist ebenfalls Stand der Technik. Es wurde u.a. zusammen mit den entsprechenden Geräten auf der Fachkonferenz "Polyurethanes Expo 98" in Dallas (Texas) vorgestellt.

Die Verwendung von Ultraschall zum Verfolgen, Beobachten und Messen der Reaktionskinetik von Schäumreaktionen hat erhebliche Nachteile. Zum einen erfordert dieses Meßverfahren einen erheblichen apparativen Aufwand, da der Ultraschallsensor direkt oberhalb der zu verschäumenden Probe angebracht werden muß. Zum anderen ist die Auflösung, wie bereits angedeutet, durch die Wellenlänge des Schalls beschränkt und man erhält keine Informationen über die Gestalt des Schaumes oder über sein Raumgewicht. Nachteilig ist auch, daß mit einem einzelnen Ultraschallsensor nur jeweils ein Schäumversuch verfolgt werden kann. Das Meßverfahren ist also nicht parallelisierbar.

US 4,403,502 betrifft ein unbewegliches Viskosimeter und ein Verfahren zur Untersuchung von polymeren Schäumen, bei dem dieses Viskosimeter verwendet wird. Das Viskosimeter umfasst einen Vorratsbereich, einen Empfangsbereich und ein dazwischen geschaltetes Verbindungsrohr. Die Viskosität des expandierenden Schaums wird auf der Basis von Messungen des axialen Drucks in dem Verbindungsrohr und von Messungen des Schaumwachstums bestimmt. Die Messungen können mit kleinen Schaummengen durchgeführt werden und auf große Mengen extrapoliert werden. Das Schaumwachstum wird im Allgemeinen mittels Ultraschall gemessen. Alternativ ist auch eine Messung des Schaumwachstums mit Hilfe einer Filmkamera durch eine transparente Wand möglich.

US 5,740,074 betrifft ein Verfahren zum Ausfüllen einer Aushüllung (z. B. einer Gefriereinheit) mit Schaum, der durch Expandieren und Verfestigen einer schaumbildenden Mischung erzeugt wird. Dazu wird eine bekannte Menge der schaumbildenden Mischung in einer Testkammer erzeugt und vorbestimmte Parameter, wie Oberflächenhöhe und Druck, gemessen, um die mittlere Dichte und Viskosität des Schaums als Funktion der Zeit zu ermitteln. Mit Hilfe eines Computerprogramms werden die ermittelte mittlere Dichte und Viskosität genutzt, um den Ablauf des Schäumungsprozesses für verschiedene Mengen an Ausgangsmaterial zu ermitteln. Die Messung der Oberflächenhöhe des Schaums zu einer bestimmten Zeit wird im Allgemeinen mit Hilfe einer Videokamera vorgenommen.

Eine Aufgabe der vorliegenden Erfindung ist es nun, ein Verfahren und eine Vorrichtung bereitzustellen, mit denen man mehrere Schäumreaktionen gleichzeitig zuverlässig und möglichst genau auswerten kann. Ein weiteres Ziel der Erfindung ist es Aussagen über die Haftfähig Hafteigenschaften des Schaumes an speziellen Oberflächen und/oder über an der Oberfläche des entstehenden Schaumes herrschende Eigenschaften zu gewinnen.

Gelöst wird diese Aufgabe durch ein Verfahren gemäß Anspruch 1 der vorliegenden Erfindung und eine entsprechende Vorrichtung gemäß Anspruch 10. Weitere vorteilhafte Ausführungsformen sind in den Unteransprüchen angegeben.

Demgemäß wird erfindungsgemäß ein Verfahren zur Auswertung mindestens eines beim Verschäumen mindestens einer Substanz ablaufenden Schäumvorgangs bereitgestellt, wobei das Verfahren mindestens die folgenden Schritte aufweist:
a) Aufnehmen und Umwandeln mindestens eines der von dem mindestens einen Schäumvorgang ausgehenden optischen Signale in mindestens ein übertragbares elektronisches Signal mittels eines Aufnahme- und Umwandlungssystems,
b) Auswerten des mindestens einen übertragbaren elektrischen Signals aus Schritt a) mittels eines Verarbeitungssystems,
dadurch gekennzeichnet, dass das Aufnahmesystem an verschiedenen Stellen zu der zu untersuchenden Substanz positioniert wird, um so ein dreidimensionales Bild des entstehenden Schaums zu erhalten.

In einer bevorzugten Ausführungsform des erfindungsgemäßen Verfahrens wird zum Aufnehmen und Umwandeln der von dem mindestens einen Schäumvorgang ausgehenden optischen Signale eine Videokamera verwendet. Mit Hilfe dieser Viedeokamera wird die Schäumreaktion aufgenommen. Die von der Videokamera gelieferten Bilder werden sodann an ein geeignetes Verarbeitungssystem weitergegeben und dort ausgewertet.

In einer bevorzugten Ausführungsform des erfindungsgemäßen Verfahrens wird zur Auswertung ein Personal Computer verwendet, der mit der entsprechenden dafür erstellten Software ausgestattet ist. Ebenso wie bei den bekannten, bereits kurz beschriebenen Meßverfahren, wird auch hier eine Foamrise-Kurve aufgenommen. Dabei wird die Steighöhe des Schaumes gegen die Zeit aufgetragen. Mit Hilfe der Software erhält man auch hier über die Steigung der Foamrise-Kurve Aussagen bezüglich einiger kinetischer Parameter der Schäumreaktion. Man bekommt beispielsweise Information über einige Reaktionszeiten, wie die Startzeit, die Steigzeit und den Zeitpunkt der maximalen Steiggeschwindigkeit.

Demgemäß wird mithilfe des erfindungsgemäßen Verfahren mindestens ein kinetischer Parameter des mindestens einen Schäumvorgangs bestimmt.

Weiterhin vorzugsweise wird bei dem erfindungsgemäßen Verfahren die Dichte des Schaumes bestimmt. Nach Erreichen der Steigzeit, d.h. wenn die Foamrise-Kurve in eine Sättigung übergeht, erhält man mittels der durch die erfindungsmäßig verwendeten Software ermittelbaren Steighöhe des Schaumes und den bekannten Abmessungen des Reaktionsbehälters zunächst eine Aussage über das Volumen des entstandenen Schaumes und zusammen mit der bekannten, zu Anfang der Reaktion eingesetzten Masse der zu verschäumenden Substanz letztlich eine Aussage über die Dichte des Schaumes.

Durch Verwendung einer Videokamera zur Dokumentation des Schäumvorgangs erhält man eine wesentlich höhere Auflösung als bei den bisher bekannten Meßverfahren erreicht werden konnten. Alle Punkte der Schaumoberfläche werden vom Bildverarbeitungssystem bezüglich ihrer Lage auf eine Genauigkeit ≤ 1 mm, insbesondere < 1 mm vermessen.

Ein weiterer Vorteil des erfindungsgemäßen Verfahrens ist darin zu sehen, daß bei dem Schäumvorgang wesentlich kleinere Behälter verwendbar sind, um die gleiche oder sogar eine bessere Genauigkeit zu erzielen als es bisher möglich war. Behälter mit einem Fassungsvermögen im Bereich von etwa 10 bis etwa 1000 ml, insbesondere von 10 ml bis 500 ml können verwendet werden. In einer bevorzugten Ausführungsform des erfindungsgemäßen Verfahrens ist das Endvolumen der entstandenen Schäume ≤ 1000 ml.

Vorzugsweise werden erfindungsmäßig transparente Behälter verwendet. Opake, d.h. trübe Behälter aus Polyethylen oder Polypropylen sind geeignet. Ganz besonders sind glasklare Behälter geeignet, wie sie beispielsweise aus Polystyrol herstellbar sind.

In einer bevorzugten Ausführungsform des erfindungsgemäßen Verfahrens werden mehrere Schäumreaktionen parallel beobachtet, aufgenommen und ausgewertet. Dadurch ist das erfindungsgemäße Verfahren sehr effizient, schnell und kostengünstig. Zudem lassen sich verschiedene Schäume unmittelbar miteinander vergleichen, da absolut gleiche Versuchsbedingungen gegeben sind.

In einer anderen bevorzugten Ausführungsform des erfindungsgemäßen Verfahrens wird die Form der bei der Schäumreaktion entstehenden Schaumköpfe ausgewertet. Über die Form der Schaumköpfe erhält man Angaben über die Fließfähigkeit des Schaumes.

In einer anderen bevorzugten Ausführungsform des erfindungsgemäßen Verfahrens wird das Verfahren automatisiert. Das herkömmliche Verfahren läßt sich nicht oder nur sehr schwer automatisieren, weil das Volumen des entstandenen Schaums durch Abscheiden des Kopfes parallel zum Behälter, dessen Volumen bekannt ist, bestimmt wird. Aus dem bestimmten Volumen und dem Gewicht des ausgeschäumten Behälters minus des Behältergewichtes ergibt sich die Schaumdichte. Demgemäß kann mithilfe des erfindungsgemäßen Verfahren die Dichte des bei dem mindestens einen Schäumvorgang entstehenden Schaums bestimmt werden. In einer weiteren bevorzugten Ausführungsform des erfindungsgemäßen Verfahrens kann die Schaumdichte automatisch gewonnen werden, da mit den rotationssymmetrischen Behältern über die durch Bildverarbeitung bestimmte Querschnittsfläche das Volumen ermittelt werden kann. Mit Hinzunahme der eingewogenen Rohstoffmengen kann so die Dichte vollautomatisch bestimmt werden. Auch dies ist mit einer erheblichen Kostenund Zeitersparnis verbunden.

Erfindungsgemäß wird die Aufnahmeeinheit, vorzugsweise die Videokamera an verschiedenen Stellen zu der zu untersuchenden Probe positioniert, um so ein dreidimensionales Bild des entstehenden Schaumes zu erhalten. Die Positionsänderung der Videokamera kann vorzugsweise automatisiert und gesteuert werden, sowohl hinsichtlich der gewünschten Positionen, die die Videokamera einnehmen soll als auch hinsichtlich der gewünschten Verweildauer an den unterschiedlichen Positionen. Durch die Aufnahme von Bildern aus verschiedenen Perspektiven ergeben sich neue Möglichkeiten für die Beobachtung von Schäumreaktionen, so beispielsweise lassen sich Aussagen gewinnen über die Hafteigenschaften des Schaumes an speziellen Oberflächen und/oder über an der Oberfläche des entstehenden Schaumes herrschende Eigenschaften.

Ferner betrifft die Erfindung eine Vorrichtung zur Auswertung mindestens eines beim Verschäumen mindestens einer Substanz ablaufenden Schäumvorgangs, wobei die Vorrichtung mindestens die folgenden Elemente aufweist:
A) mindestens eine Aufnahme- und Umwandlungssystem zur Aufnahme und Umwandlung optischer Signale in übertragbare elektronische Signale,
B) mindestens ein Verarbeitungssystem zur Auswertung elektronischer Signale,
dadurch gekennzeichnet, dass die Aufnahmeeinheit an verschiedenen Stellen zu der zu untersuchenden Substanz positionierbar ist, sowie Mittel aufweist, um aus den Aufnahmen von verschiedenen Positionen ein dreidimensionales Bild des entstehenden Schaums zu erhalten.

Vorzugsweise ist das mindestens eine Aufnahme- und Umwandlungssystem eine Videokamera.

Ferner wird für das mindestens eine Verarbeitungssystem ein mit einer Software ausgestattetes Rechensystem, vorzugsweise ein Computer, eingesetzt.

In einer bevorzugten Ausführungsform der erfindungsgemäßen Vorrichtung weist die Vorrichtung zusätzlich noch eine Kontroll- und Steuereinheit auf, mit deren Hilfe die Vorrichtung automatisch gesteuert und gleichzeitig kontrolliert werden kann.

In einer anderen bevorzugten Ausführungsform der erfindungsgemäßen Vorrichtung weist die Vorrichtung ferner noch eine Einheit auf, mit deren Hilfe das Aufnahme- und Umwandlungssystem in seiner Position gegenüber der zu untersuchenden Probe automatisch verschoben werden kann.

## Patentansprüche

1. Verfahren zur Auswertung mindestens eines beim Verschäumen mindestens einer Substanz ablaufenden Schäumvorgangs, wobei das Verfahren mindestens die folgenden Schritte aufweist:
a) Aufnehmen und Umwandeln mindestens eines der von dem mindestens einen Schäumvorgang ausgehenden optischen Signale in mindestens ein übertragbares elektronisches Signal mittels eines Aufnahme- und Umwandlungssystems,
b) Auswerten des mindestens einen übertragbaren elektrischen Signals aus Schritt a) mittels eines Verarbeitungssystems,
**dadurch gekennzeichnet, dass** das Aufnahmesystem an verschiedenen Stellen zu der zu untersuchenden Substanz positioniert wird, um so ein dreidimensionales Bild des entstehenden Schaums zu erhalten.

2. Verfahren nach Anspruch 1, **dadurch gekennzeichnet, daß** in Schritt a) das Aufnahmeund Umwandlungssystem eine Videokamera ist.

3. Verfahren nach Anspruch 1 oder 2, **dadurch gekennzeichnet, daß** das Verarbeitungssystem in Schritt b) ein mit einer Software ausgestattetes Rechensystem, vorzugsweise ein Computer, ist.

4. Verfahren nach einem der Ansprüche 1 bis 3, **dadurch gekennzeichnet, daß** in Schritt b) eine Foamrise-Kurve erstellt wird.

5. Verfahren nach einem der Ansprüche 1 bis 4, **dadurch gekennzeichnet, daß** in Schritt b) mindestens ein kinetischer Parameter des mindestens einen Schäumvorgangs bestimmt wird.

6. Verfahren nach einem der Ansprüche 1 bis 5, **dadurch gekennzeichnet, daß** bei dem mindestens einen Schäumvorgang ein Schaum mit einem Endvolumen < 1000 ml entsteht.

7. Verfahren nach einem der Ansprüche 1 bis 6, **dadurch gekennzeichnet, daß** der mindestens eine Schäumvorgang in einem transparenten Behälter stattfindet.

8. Verfahren nach einem der Ansprüche 1 bis 7, **dadurch gekennzeichnet, daß** in Schritt b) die Dichte des bei dem mindestens einen Schäumvorgang entstehenden Schaums bestimmt wird.

9. Verfahren nach einem der Ansprüche 1 bis 8, **dadurch gekennzeichnet, daß** das Verfahren automatisierbar ist.

10. Vorrichtung zur Auswertung mindestens eines beim Verschäumen mindestens einer Substanz ablaufenden Schäumvorgangs, wobei die Vorrichtung mindestens die folgenden Elemente aufweist:
A) mindestens eine Aufnahme- und Umwandlungssystem zur Aufnahme und Umwandlung optischer Signale in übertragbare elektronische Signale,
B) mindestens ein Verarbeitungssystem zur Auswertung elektronischer Signale,
**dadurch gekennzeichnet, dass** die Aufnahmeeinheit an verschiedenen Stellen zu der zu untersuchenden Substanz positionierbar ist, sowie Mittel aufweist, um aus den Aufnahmen von verschiedenen Positionen ein dreidimensionales Bild des entstehenden Schaums zu erhalten.

11. Vorrichtung nach Anspruch 10, **dadurch gekennzeichnet, daß** das mindestens eine Aufnahme- und Umwandlungssystem eine Videokamera ist.

12. Vorrichtung nach Anspruch 10 oder 11, **dadurch gekennzeichnet, daß** das mindestens eine Verarbeitungssystem ein mit einer Software ausgestattetes Rechensystem, vorzugsweise ein Computer, ist.

## Claims

1. A method for evaluating at least one foaming process which takes place during foaming of at least one substance, the method comprising at least the following steps:
a) recording and conversion of at least one of the optical signals originating from the one or more foaming processes into at least one transmittable electronic signal by means of a recording and conversion system,
b) evaluation of the one or more transmittable electrical signals from step a) by means of a processing system,
wherein the recording system is positioned at various points relative to the substance to be investigated, in order thus to obtain a three-dimensional image of the resulting foam.

2. A method as claimed in claim 1, wherein, in step a), the recording and conversion system is a video camera.

3. A method as claimed in claim 1 or 2, wherein the processing system in step b) is a computing system, preferably a computer, equipped with software.

4. A method as claimed in any of claims 1 to 3, wherein, in step b), a foamrise curve is prepared.

5. A method as claimed in any of claims 1 to 4, wherein, in step b), at least one kinetic parameter of the one or more foaming processes is determined.

6. A method as claimed in any of claims 1 to 5, wherein, in the one or more foaming processes, a foam having a final volume of ≤ 1000 ml forms.

7. A method as claimed in any of claims 1 to 6, wherein the one or more foaming processes each take place in a transparent container.

8. A method as claimed in any of claims 1 to 7, wherein, in step b), the density of foam formed in the one or more foaming processes is determined.

9. A method as claimed in any of claims 1 to 8, wherein the method can be automated.

10. An apparatus for evaluating at least one foaming process which takes place during foaming of at least one substance, the apparatus comprising at least the following elements:
A) at least one recording and conversion system for recording and converting optical signals into transmittable electronic signals,
B) at least one processing system for evaluating electronic signals,
wherein the recording unit can be positioned at various points relative to the substance to be investigated and has means for obtaining a three-dimensional image of the resulting foam from the recordings from various positions.

11. An apparatus as claimed in claim 10, wherein the one or more recording and conversion systems are video cameras.

12. An apparatus as claimed in claim 10 or 11, wherein the one or more processing systems are computing systems, preferably computers, equipped with software.

## Revendications

1. Procédé pour l'évaluation d'au moins un processus d'expansion en mousse se déroulant lors de l'expansion en mousse d'au moins une substance, dans lequel le procédé comporte au moins les étapes suivantes:
a) enregistrement et conversion d'au moins l'un des signaux optiques provenant dudit procédé d'expansion en mousse en au moins un signal électronique transférable au moyen d'un système d'enregistrement et de conversion,
b) évaluation dudit signal électrique transférable provenant de l'étape a) au moyen d'un système de traitement,
**caractérisé par le fait que** le système d'enregistrement est positionné en différents endroits par rapport à la substance à analyser, pour obtenir ainsi une image tridimensionnelle de la mousse formée.

2. Procédé selon la revendication 1, **caractérisé par le fait que** dans l'étape a) le système d'enregistrement et de conversion est une caméra vidéo.

3. Procédé selon la revendication 1 ou 2, **caractérisé par le fait que** le système de traitement dans l'étape b) est un système de calcul équipé d'un logiciel, de préférence un ordinateur.

4. Procédé selon l'une des revendications 1 à 3, **caractérisé par le fait que** dans l'étape b) on établit une courbe de gonflement de mousse.

5. Procédé selon l'une des revendications 1 à 4, **caractérisé par le fait que** dans l'étape b) on détermine au moins un paramètre cinétique dudit processus d'expansion en mousse.

6. Procédé selon l'une des revendications 1 à 5, **caractérisé par le fait que** dans ledit processus d'expansion en mousse il se forme une mousse ayant un volume fmal ≤1000 ml.

7. Procédé selon l'une des revendications 1 à 6, **caractérisé par le fait que** ledit processus d'expansion en mousse a lieu dans un récipient transparent.

8. Procédé selon l'une des revendications 1 à 7, **caractérisé par le fait que** dans l'étape b) on détermine la densité de la mousse formée dans ledit processus d'expansion en mousse.

9. Procédé selon l'une des revendications 1 à 8, **caractérisé par le fait que** le procédé peut être automatisé.

10. Dispositif pour l'évaluation d'au moins un processus d'expansion en mousse se déroulant lors de l'expansion en mousse d'au moins une substance, tandis que le dispositif possède au moins les éléments suivants:
A) au moins un système d'enregistrement et de conversion pour l'enregistrement et la conversion de signaux optiques en signaux électroniques transférables,
B) au moins un système de traitement pour l'évaluation des signaux électroniques,
**caractérisé par le fait que** l'unité d'enregistrement est apte à être positionnée en différents endroits par rapport à la substance à analyser, ainsi que présente des moyens pour l'obtention d'une image tridimensionnelle de la mousse formée, à partir des enregistrements de différentes positions.

11. Dispositif selon la revendication 10, **caractérisé par le fait que** le au moins un système d'enregistrement et de conversion est une caméra vidéo.

12. Dispositif selon la revendication 10 ou 11, **caractérisé par le fait que** ledit système de traitement est un système de calcul équipé d'un logiciel, de préférence un ordinateur.
